Europäisches Patentamt

European Patent Office

Office européen des brevets

(19)

(11) Veröffentlichungsnummer: **0 266 801 B1**

## (12) EUROPÄISCHE PATENTSCHRIFT

(45) Veröffentlichungstag der Patentschrift: 25.09.91

(51) Int. Cl.$^5$: **C25B 15/08, C25B 1/46**

(21) Anmeldenummer: 87116523.9

(22) Anmeldetag: 09.11.87

(54) Verfahren zur Herstellung von Alkalihydroxid, Chlor und Wasserstoff durch Elektrolyse einer wäßrigen Alkalichloridlösung in einer Membranzelle.

(30) Priorität: 07.11.86 DE 3637939

(43) Veröffentlichungstag der Anmeldung:
11.05.88 Patentblatt 88/19

(45) Bekanntmachung des Hinweises auf die
Patenterteilung:
25.09.91 Patentblatt 91/39

(84) Benannte Vertragsstaaten:
AT BE DE ES FR GB IT SE

(56) Entgegenhaltungen:
FR-A- 2 115 855
US-A- 4 586 993

CHEMICAL ABSTRACTS, Band 105, Nr. 22,
Dezember 1986, Seite 164, Nr. 193855a, Columbus, Ohio, US; & JP-A-61 101 416 (OSAKA
SODA CO., LTD) 20-05-1986

(73) Patentinhaber: **METALLGESELLSCHAFT AG**
**Reuterweg 14 Postfach 3724**
**W-6000 Frankfurt/M.1(DE)**

(72) Erfinder: **Dworak, Rainer, Dr.**
**Heinrich-Heine-Strasse 5a**
**W-6200 Wiesbaden(DE)**
Erfinder: **Lohrberg, Karl**
**Breslauer Strasse 1**
**W-6056 Heusenstamm(DE)**

## Beschreibung

Die Erfindung betrifft ein Verfahren zur Herstellung von Alkalihydroxid, Chlor und Wasserstoff durch Membranelektrolyse einer wäßrigen Alkalichloridlösung, wobei man in einem Salzlöser festes, NaCl-reiches, Verunreinigungen enthaltendes Salz mit Wasser löst, die Salzlösung mit Fällchemikalien zum Ausfällen der Verunreinigungen versetzt und einem Eindicker aufgibt, aus dem Eindicker Fällungsprodukte und getrennt davon geklärte Rohsole abzieht, Rohsole einer Feinreinigung unterzieht, die feingereinigte Sole der Membranelektrolyse zuführt und verbrauchte Sole in den Salzlöser leitet.

Die Elektrolyse wäßriger Alkalichloridlösungen nach dem Membranverfahren ist bekannt. Hierbei sind in einer Elektrolysezelle Anodenkammer und Kathodenkammer durch eine Ionenaustauscher-Membran getrennt. In die Anodenkammer tritt gereinigte Sole mit etwa 26 % Natriumchlorid ein, während der ablaufende Anolyt, die sogenannte Dünnsole, etwa 18 % Natriumchlorid enthält. Als Reaktionsprodukt entsteht an der Anode Chlor. Die Kathodenkammer wird mit Wasser beschickt. Als Reaktionsprodukte entstehen Natriumhydroxid im Katholyten und Wasserstoff an der Kathode. Der ablaufende und an Natriumchlorid verarmte Elektrolyt muß aus der Anodenkammer ausgeschleust werden, kann jedoch nach Entchlorung, Aufsättigen und Reinigung wieder der Anodenkammer zugeführt werden. Wenn von Steinsalz zum Aufsättigen der Dünnsole ausgegangen wird, muß zwischen Sättigungsanlage und Elektrolysezelle, also im Anolytkreislauf, eine Reinigung der Sole vorgenommen und diese weitgehend von im Rohsalz vorhandenem Calcium und Magnesium befreit werden.

Das eingangs genannte Verfahren ist aus der DE-OS 28 16 772 bekannt, dabei werden die aus dem Eindicker abgezogenen Fällungsprodukte zum Teil vor den Eindicker zurückgeführt. Damit soll das Gemisch mit Kristallisationskeimen angereichert werden, um daraus $SiO_2$ besser auszufällen. Die gereinigte Sole wird in bekannter Weise über Filter und Ionenaustauscher der Anodenkammer zugeführt und elektrolysiert. Der ablaufende Anolyt wird nach Entchlorung dem Salzlöser zugeführt.

Der Erfindung liegt die Aufgabe zugrunde, auf einfache Weise den Gehalt an Magnesiumionen und Hydroxylionen in der zu reinigenden Sole zu vermindern, dabei gleichzeitig den Anolytkreislauf weniger anfällig gegen Schwankungen in den Fällungsbedingungen zu machen und insgesamt die Membranelektrolyse wirtschaftlicher zu gestalten. Erfindungsgemäß geschieht dies dadurch, daß man die aus dem Eindicker kommende geklärte Rohsole im Verhältnis 2:1 bis 20:1 in einen ersten und zweiten Teilstrom aufteilt, den ersten, größeren Teilstrom mit der Salzlösung und den Fällchemikalien vor dem Eindicker mischt und das Gemisch dem Eindicker aufgibt, und den zweiten Teilstrom der Feinreinigung zuführt.

Die Reinigung der Rohsole erfolgt nach an sich bekannten Methoden. Üblicherweise wird aus der Rohsole Calcium als Carbonat, Magnesium und Eisen als Hydroxid und Sulfat als Bariumsulfat gefällt. Da die Fällchemikalien, insbesondere Bariumsalze, erhebliche Kosten verursachen können, kann nach weiteren bekannten Reinigungsverfahren aus die Verwendung von Kalk oder Calciumchlorid oder auch ein Fällprozeß mit Kalk und Soda und vorzugsweise Soda und Natriumhydroxid vorgesehen werden.

Die ausgefällten Verunreinigungen werden zunächst im Eindicker durch Sedimentation abgeschieden. Der zweite Teilstrom der geklärten Rohsole wird dann noch durch Filtration gereinigt, so daß die gereinigte Sole in aller Regel nicht mehr als 0,5 bis 1 mg/1 Mg und nicht mehr als 2 bis 3 mg/l Ca bei einem Gehalt an Natriumchlorid von 300 bis 320 g/l enthält.Der aus der Elektrolyse ablaufende, an Natriumchlorid verarmte Anolyt mit einem Gehalt von etwa 160 bis 240 g/l NaCl wird nach Entchlorung zum Lösen von frischem Salz (Rohsalz) verwendet.

Die Vorteile des erfindungsgemäßen Verfahrens sind darin zu sehen, daß die Hydroxylionen-Konzentration schon in der geklärten Rohsole und auch in der Reinsole nach der Feinreinigung aufgrund des zuvor gefällten Magnesiums niedrig ist. Auch ist die Magnesium-Konzentration im Anolyten besonders gering. Durch einen großen ersten Teilstrom der geklärten Rohsole sowie auch durch Erhöhen des Ca/Mg-Verhältnisses durch Zugabe von Calcium in Form von $CaCl_2$, $CaO$, $Ca(OH)_2$ oder gegebenenfalls $CaCO_3$ werden der Magnesium- und der Hydroxylionengehalt in der zu reinigenden Sole vermindert und die Fällbedingungen verbessert.

Die Erfindung wird anhand des Fließschemas sowie eines Ausführungsbeispiels näher und beispielhaft erläutert.

Das Beispiel betrifft eine Anlage zur Erzeugung von ca. 15 tato Natriumhydroxid durch Elektrolyse einer wäßrigen Lösung von Natriumchlorid in einer Membranzelle mit ionenselektiver Membran.

In den Salzlöser (1) wird über Leitung (1a) Wasser in einer Menge von 1 m³/h eingespeist wowie gleichzeitig über Einlaß (1b) Steinsalz in fester Form in einer Menge von 1000 kg/h. Mit dieser Menge werden pro Stunde Verunreinigungen von etwa 4 kg Ca (~0,4 %) und etwa 15 kg Mg (~ 1,5 %) eingeschleppt. Durch Leitung (1c) wird Calcium gleichzeitig als Fällchemikalie in fester oder flüssiger Form als $CaCl_2$, $CaO$ oder $Ca(OH)_2$ eingetragen. Über die Leitung (2) wird aus der Salzlösestation (1) ein Solestrom von ca. 6 m³/h ausgetragen, der ein Ca/Mg-Verhältnis nunmehr von größer als 1 aufweist. Die geklärte Rohsole aus dem Eindicker (3) wird in einen ersten und zweiten Teilstrom im Verhältnis 2:1 bis 20:1 aufgeteilt, wobei der erste, größere Teilstrom in der Kreislaufleitung (3a) vor den Eindicker zurückgeführt wird. Der zweite Teilstrom der geklärten Rohsole wird in der Leitung (6) abgeführt.

In der Kreislaufleitung (3a) zirkulieren nunmehr 30 m³/h Rohsole mit einem Gehalt von 0,5 g Mg/l. In diesen Kreislauf werden über Leitung (4) Natriumhydroxid und Soda als ca. 10%ige Lösung eingespeist. Aus dem Eindicker (3) zieht man über die Leitung (5) die Fällungsprodukte Calciumcarbonat und Magnesiumhydroxid ab. Günstige Fällungsbedingungen für das Magnesium werden durch eine Verringerung der Magnesiumionenkonzentration eingestellt. Beim erfindungsgemäßen Verfahren erreicht man dies dadurch, daß die gleiche Menge in einem größeren Volumen zirkuliert. Ferner erreicht man durch die Calciumzugabe ein erhöhtes Ca/Mg-Verhältnis, was ebenfalls die Fällung das Magnesiums verbessert.

Die geklärte Rohsole der Leitung (6), die einen Basengehalt von 0,1 bis 1 g NaOH/1 aufweist, wird in einer Menge von 6 m³/h einer Feinreinigung (7) durch Sandfilter und Ionenaustauscher unterzogen. Die so erzeugte Reinsole wird über die Leitung (8) in die Anodenkammer der Membranzelle (9) eingespeist. Der in der Leitung (10) ablaufende Anolyt in einer Menge von 4,6 m³/h und mit einem pH-Wert von etwa 4 bis 5 wird mit Salzsäure (11) auf einen pH-Wert von 0 bis 3 gebracht, um die Hypochloritbildung herabzudrücken, und der Entchlorungsvorrichtung (12) zugeführt, wo die Entchlorung durch Vakuum und/oder durch Einblasen von Luft erfolgt. Die entchlorte Dünnsole tritt über Leitung (13) wieder in die Salzlösestation (1) ein.

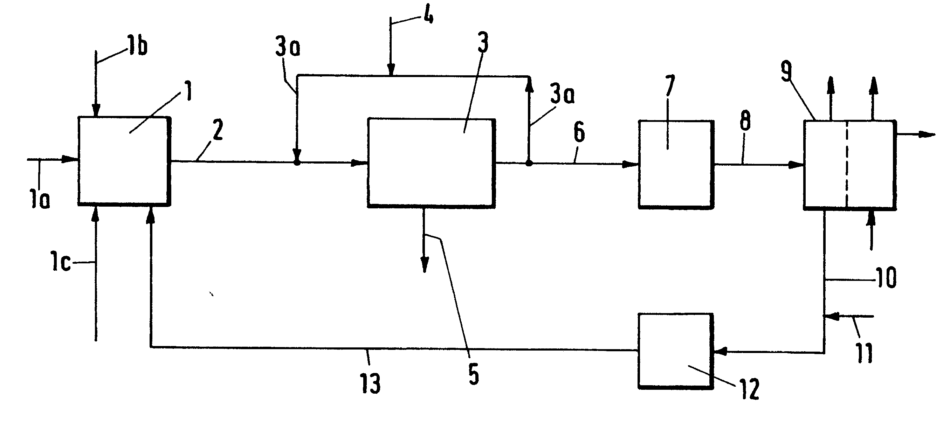

## Patentansprüche

1. Verfahren zur Herstellung von Alkalihydroxid, Chlor und Wasserstoff durch Membranelektrolyse einer wäßrigen Alkalichloridlösung, wobei man in einem Salzlöser festes, NaCl-reiches, Verunreinigungen enthaltendes Salz mit Wasser löst, die Salzlösung mit Fällchemikalien zum Ausfällen der Verunreinigungen versetzt und einem Eindicker aufgibt, aus dem Eindicker Fällungsprodukte und getrennt davon geklärte Rohsole abzieht, Rohsole einer Feinreinigung unterzieht, die feingereinigte Sole der Membranelektrolyse zuführt und verbrauchte Sole in den Salzlöser leitet, dadurch gekennzeichnet, daß man die aus dem Eindicker kommende geklärte Rohsole im Verhältnis 2:1 bis 20:1 in einen ersten und zweiten Teilstrom aufteilt, den ersten, größeren Teilstrom mit der Salzlösung und den Fällchemikalien vor dem Eindicker mischt und das Gemisch dem Eindicker aufgibt, und den zweiten Teilstrom der Feinreinigung zuführt.

## Claims

1. A process for producing alkali hydroxide, chlorine and hydrogen by membrane electrolysis of an aqueous alkali chloride solution, wherein solid, NaCl-rich salt containing impurities is dissolved in water in a salt dissolver, precipitating chemicals are added to the salt solution in order to precipitate the impurities, and the mixture is fed to a thickener, precipitation products and, separately therefrom, clarified raw brine are withdrawn from the thickener, raw brine is subjected to fine purification, the finely-purified brine is sent for membrane electrolysis and spent brine is passed into the salt dissolver, characterised in that the clarified raw brine coming from the thickener is divided into a first and second partial stream in a ratio of 2:1 to 20:1, the first, larger partial stream is mixed with the salt solution and the precipitating chemicals before the thickener and the mixture is fed into the thickener, and the second partial stream is sent for fine purification.

## Revendications

1. Procédé de préparation d'hydroxyde de métal alcalin, de chlore et d'hydrogène par électrolyse par membrane d'une solution aqueuse de chlorure de métal alcalin, qui consiste à dissoudre par de l'eau, dans un appareil de dissolution de sels, du sel solide riche en NaCl et contenant des impuretés, à mélanger la solution de sel à des produits chimiques de précipitation pour séparer les impuretés par précipitation et à l'envoyer dans un épaississeur, à retirer de l'épaississeur des produits précipités et, indépendamment de ceux-ci, de la saumure brute et limpide, à soumettre la saumure brute à une épuration fine, à envoyer la saumure finement épurée à l'électrolyse à membrane, et à envoyer la saumure usée à l'appareil de dissolution de sels, caractérisé en ce qu'il consiste à subdiviser la saumure brute et limpide, provenant de l'épaississeur dans le rapport 2:1 à 20:1 en un premier et en un second courants partiels, à mélanger le premier courant partiel le plus grand à la solution de sel et aux produits chimiques de précipitation en amont de l'épaississeur, et à charger le mélange dans l'épaississeur, et à envoyer le second courant partiel à l'épuration fine.